Europäisches Patentamt

European Patent Office

Office européen des brevets

(19)

(11) Veröffentlichungsnummer: **0 012 996**
A1

(12) **EUROPÄISCHE PATENTANMELDUNG**

(21) Anmeldenummer: 79105273.1

(22) Anmeldetag: 19.12.79

(51) Int. Cl.³: **A 01 G 9/24**
A 01 G 9/14, F 24 F 7/04
E 04 H 3/16

(30) Priorität: 20.12.78 DE 2855154

(43) Veröffentlichungstag der Anmeldung:
09.07.80 Patentblatt 80/14

(84) Benannte Vertragsstaaten:
BE CH FR GB IT LU NL SE

(71) Anmelder: Lamm, Helmut
Rosenweg 21
D-7303 Neuhausen/Filder(DE)

(72) Erfinder: Pöschl, Günter
Schillerstrasse 48
D-7053 Schwaikheim(DE)

(74) Vertreter: Menges, Rolf et al,
PATENTANWÄLTE MENGES & PRAHL Erhardtstrasse 12
D-8000 München 5(DE)

(54) Folienhalle.

(57) Bei dieser Folienhalle sind auf einem Traggerüst (1) eine Innenwand (3) und eine Außenwand (4) aus glasklarer thermoplastischer Folie angeordnet und an den Längsseiten der Halle sind verstellbare Lüftungsklappen (14) zur Regulierung der Temperatur im Innern der Halle vorgesehen.

Zwecks Vereinfachung und Verbilligung dieser Temperatur-regulierung wird ein verbessertes Belüftungssystem geschaffen, bei dem der Raum zwischen Innen- und Außenwand (3, 4) an seinem unteren Ende oberhalb der Lüftungsklappen (14) mit der äußeren Umgebung über wenigstens einen Lufteinlaß (6) mit einem darin vorgesehenen steuerbaren Absperrorgan (23) und an seinem oberen Ende in der Nähe des Firstes der Halle mit deren Innerem über wenigstens einen Luftauslaß (27) verbunden ist, was ermöglicht, Luft über die Lüftungsklappen und/oder den Raum zwischen Innen- und Außenwand in die Halle einzulassen.

Fig.1

EP 0 012 996 A1

PATENTANWALTE
MENGES & PRAHL
Ernardtstrasse 12, D-8000 München 5

0012996

Unser Zeichen        L 140 - EP

Helmut Lamm

7303 Neuhausen/Filder

---

Folienhalle

---

Die Erfindung betrifft eine Folienhalle der im Oberbegriff
des Anspruchs 1 angegebenen Art.

Bekannte Hallen dieser Art werden insbesondere als Gewächshäuser verwendet, wobei aber sowohl die Innenwand als auch
die Außenwand aus duroplastischem Kunststoff oder Glas bestehen. Sie können eine Sonnenheizanlage aufweisen, bei der
als Wärmeträger eine Flüssigkeit, insbesondere Wasser, dient,
die durch den Raum zwischen Innen- und Außenwand hindurchgeleitet wird (DE-OS 2 522 791 und Süddeutsche Zeitung
Nr. 104 vom 6. Mai 1974, S. VII, "Sonnenenergienutzung:Wenig
Hoffnung für Europa").

Wenn solche Folienhallen, die üblicherweise ringsum geschlossen sind, als Gewächshäuser verwendet werden, entsteht in

0012996

ihnen bei Sonneneinstrahlung eine hohe Temperatur, die
nicht für jede Pflanze geeignet ist. Deshalb sind in der
Innen- und Außenwand an den Längsseiten der Folienhalle üblicherweise Lüftungsklappen vorgesehen. Diese sorgen für
einen Luftaustausch zwischen innen und außen. Nachteilig ist
dabei, daß im Winter beim Öffnen der Lüftungsklappen kalte
Luft direkt über die Pflanzen hinwegstreichen und diese schädigen kann. Ein ähnlicher Nachteil ergibt sich, wenn die Folienhalle als Stall oder Schwimmbad benutzt wird, da dann
kalte Luft beim Öffnen der Lüftungsklappen direkt in die
Halle einströmen kann.

Weiter ist nachteilig bei den bekannten Lüftungsklappen, daß
diese nur einwandig ausgeführt sind, was einen hohen Wärmeverlust bedeutet.

Aufgabe der Erfindung ist es, ein verbessertes Belüftungssystem für eine Folienhalle der im Oberbegriff des Anspruchs 1
angegebenen Art zu schaffen, mit welchem sich auf wesentlich
einfachere und billigere Weise die Temperatur im Innern der
Halle bei Tag und Nacht regulieren läßt.

Diese Aufgabe wird durch die im Kennzeichen des Anspruchs 1
angegebenen Merkmale gelöst.

Während bei bekannten Gewächshäusern (DE-OS 2 522 791) der
Raum zwischen Innen- und Außenwand der Halle von dem Belüftungssystem der Halle notwendigerweise getrennt sein muß, da
in dem Raum zwischen Innen- und Außenwand ein flüssiger Wärmeträger strömt, der nur zur Beheizung der Halle dient, und
zum Belüften gesonderte Lüftungsklappen geöffnet werden müssen, wird bei der Folienhalle nach der Erfindung der zwischen Innen- und Außenwand vorhandene Raum, der sonst zur
Temperaturisolierung der Halle dient bzw. bei Vorhandensein
einer Sonnenheizanlage von dem flüssigen Wärmeträger eingenommen wird, mit dem Lüftungssystem kombiniert. Über den Luft-

0012996

einlaß besteht eine Verbindung zwischen der äußeren Umgebung und dem Raum zwischen Innen- und Außenwand. Die Luft wird in den Raum zwischen Innen- und Außenwand geleitet, erwärmt sich dort durch Sonneneinstrahlung, steigt nach oben und tritt dann in das Innere der Folienhalle ein. Während also im Stand der Technik zum Lüften lediglich Lüftungsklappen geöffnet oder geschlossen werden können, um Luft in die Folienhalle hinein oder aus der Folienhalle herauszulassen, ist es bei der Folienhalle nach der Erfindung möglich, Luft über die Lüftungsklappen und/oder den Raum zwischen Innen- und Außenwand in das Innere der Folienhalle einzulassen, was eine optimale Belüftung bei gleichzeitiger Temperaturregelbarkeit des Halleninneren ermöglicht, da die Luftzufuhr in die Folienhalle nach der Erfindung vom First aus erfolgt, wodurch die oben erwähnten Nachteile bei der Verwendung dieser Halle als Stall, Gewächshaus oder Schwimmhalle vermieden werden, und weil diese Luft von oben her bereits erwärmt einströmt. Das Ansammeln von Kondenswasser an Innen- und Außenwand wird durch die ständige Luftzirkulation zwischen denselben verhindert.

Zusätzlich zur Verbesserung und Optimierung der Belüftung und der Temperaturregelung im Inneren der Halle werden die Heizkosten beträchtlich gesenkt, da die zur Belüftung verwendete Luft gleichzeitig als Wärmeträger dient. Die Luft wird in dem Raum zwischen Innen- und Außenwand bei der Folienhalle nach der Erfindung wie der Wärmeträger in einem Sonnenkollektor erwärmt, da die Außenwand glasklar und die Innenwand vorzugsweise getönt ist. Ein weiterer besonderer Vorteil besteht bei der Folienhalle nach der Erfindung darin, daß die Lüftungsklappen im Winter bei niedriger Außentemperatur ständig geschlossen bleiben können, da die zur Belüftung erforderliche Luft über den Raum zwischen Innen- und Außenwand allein und damit erwärmt zugeführt werden kann.

In der Ausgestaltung der Folienhalle nach Anspruch 2 läßt sich die Strömung in dem Raum zwischen Innen- und Außenwand in einfacher Weise den Belüftungs- und Temperaturregelerfordernissen anpassen.

Da bei der Folienhalle nach der Erfindung der Wärmeträger der Sonnenheizanlage die Luft ist, die zum Belüften benutzt wird, kann in der Ausgestaltung nach Anspruch 3 der Wärmetauscher am Luftauslaß in der Nähe des Firstes angeordnet werden. Das ist der günstigste Anbringungsort, weil die Konvektionswirkung die erwärmte Luft und das Wasser im Kreislauf der Sonnenheizanlage dorthin treibt.

Das bei solchen Folienhallen auftretende Problem des Druckausgleiches bei niedriger Außentemperatur und wesentlich höherer Temperatur im Inneren der Halle kann bei der Folienhalle nach der Erfindung durch Ein- und Ausschalten des Wärmetauschers auf einfache Weise beseitigt werden, indem dieser bei Abkühlung des Innenraums eingeschaltet wird und warme Luft nachliefert, bis die richtige Temperatur im Inneren wiederhergestellt und damit der Druckausgleich erreicht ist.

Die Folienhalle nach der Erfindung kann überall dort verwendet werden, wo Leichtbauhallen erforderlich sind, in denen die Temperatur tagsüber nicht zu hoch ansteigen und nachts nicht zu tief abfallen darf, also beispielsweise als Lagerhalle, Stall, Gewächshaus, Schwimmhalle, Tennishalle und dgl.

Während bei bekannten Folienhallen das Traggerüst aus einer Vielzahl von verschiedenen Profilen besteht, die durch Schrauben, Nieten, Schweißen und dgl. miteinander verbunden sind, sind in der Ausgestaltung der erfindungsgemäßen Folienhalle nach Anspruch 4 lediglich zwei verschiedene Profile erforderlich, die es ermöglichen, den Raum zwischen Innen- und Außenwand in einzelne Felder zu unterteilen, die oben am First in einen Luftsammelkanal münden, bzw. die Querbinder auf einfache Weise starr miteinander zu verbinden. Durch
die Felder ergeben sich mehrere Luftzufuhrkanäle, die das
Optimieren der Belüftung und der Temperaturregelung weiter
erleichtern. Die über die hohe Kante gebogenen Querbinder
mit Hutprofil bilden dabei die Seitenwände der Luftkanalfelder und werden lediglich durch die C-Profilteile miteinander verbunden, wodurch gleichzeitig der Aufbau des
Traggerüsts wesentlich vereinfacht wird.

In der Ausgestaltung der Folienhalle nach Anspruch 5 wird
die Temperaturisolierung der Folienhalle gegenüber dem Stand
der Technik beträchtlich verbessert, da auch die Lüftungsklappen doppelwandig ausgebildet sind, und die Belüftungs-
und Temperaturregulierung wird weiter verbessert, da die
Lüftungsklappen individuell regulierbar ausgebildet sind.

Während sich im Stand der Technik die Lüftungsöffnungen im
allgemeinen über die gesamte Länge der Folienhalle erstrekken und an Bändern befestigt sind, die über eine als Rohr
ausgebildete Welle geführt sind und mittels dieser zum Öffnen
und Schließen der Lüftungsklappen aufgerollt werden, was
keine individuelle Regulierbarkeit ermöglicht, da alle Lüftungsklappen gemeinsam geöffnet oder geschlossen werden,
sind bei der erfindungsgemäßen Folienhalle in der Ausgestaltung nach Anspruch 6 die Lüftungsklappen über Umlenkrollen,
über die ein Seilzug zu einer Betätigungsvorrichtung, beispielsweise einer thermostatisch gesteuerten Winde, führt,
individuell regulierbar. Die faltenbalgartige Ausbildung
der Lüftungsklappen vereinfacht das Öffnen und Schließen derselben wesentlich.

In der Ausgestaltung der Folienhalle nach den Ansprüchen 7
und 8 ist die Belüftungs- und Temperaturregelung im Innern
der Halle auf einfache Weise möglich, da die Lüftungsklappen
geschlossen bleiben können und die Belüftungs- und Tempera-

- 6 -

0012996

tursteuerung über entsprechendes Verstellen der Klappen lediglich durch Einleiten von Luft aus dem Halleninnern in den Raum zwischen Innen- und Außenwand erfolgt.

Während im Stand der Technik gesonderte Elemente erforderlich sind, mit denen die Folie an den Querbindern festgeklemmt oder anderweitig befestigt wird, beispielsweise durch Sauger, schraubbare Elemente oder Druckknöpfe, was teuer ist und meistens eine Beschädigung der Folie nach sich zieht, wird bei der Folienhalle in der Ausgestaltung nach Anspruch 9 die Krempe ausgenutzt, indem mittels einer in der Krempe über die Folie gelegten Schnur die Folie festgehalten wird. Die Folie wird dabei wie eine auf eine Felge aufgezogene Reifendecke festgehalten.

Ein Ausführungsbeispiel der Erfindung wird im folgenden unter Bezugnahme auf die beigefügten Zeichnungen näher beschrieben. Es zeigen:

Fig. 1          einen Querschnitt durch eine Folienhalle mit zugeordneter Sonnenheizanlage und Stromversorgungsanlage,

Fig. 2          in größerem Maßstab als in Fig. 1 den Aufbau einer Lüftungsklappe,

Fig. 3          einen Schnitt auf der Linie III-III von Fig. 2,

Fig. 4          eine Teilansicht in Richtung des Pfeils IV in Fig. 2,

Fig. 5          eine Teilschnittansicht, welche eine am Lufteinlaß des Raums zwischen Innen- und Außenwand vorgesehene Klappe in geöffneter Stel-

0012996

lung sowie die Lüftungsklappe in
teilweise geöffneter Stellung zeigt,

Fig. 6        eine gleiche Ansicht wie in Fig. 5,
wobei aber der Lufteinlaß geschlossen ist,

Fig. 7        einen Schnitt auf der Linie
VII-VII von Fig. 5, der die Befestigung der Innenwand an mit
Hutprofil versehenen Querbindern
zeigt,

Fig. 8        die Folienhalle in Draufsicht und

Fig. 9        eine Innenansicht einer Längswand
der Folienhalle in Richtung des
Pfeils IX in Fig. 8.

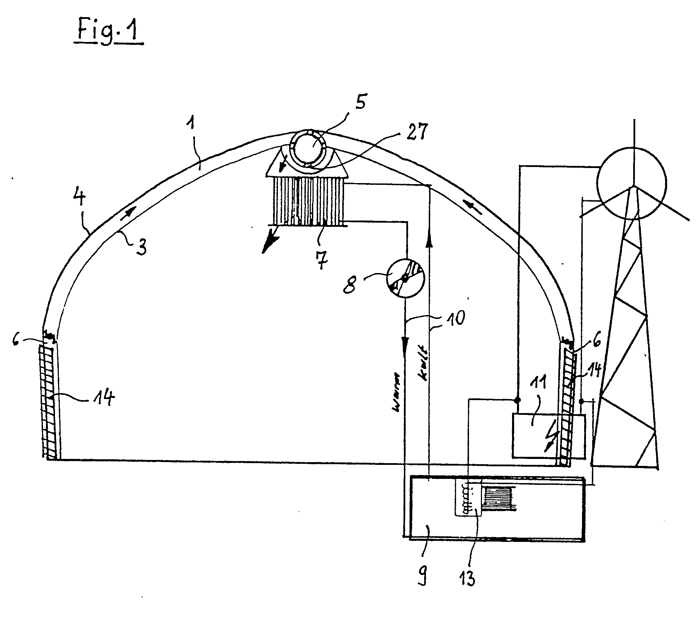

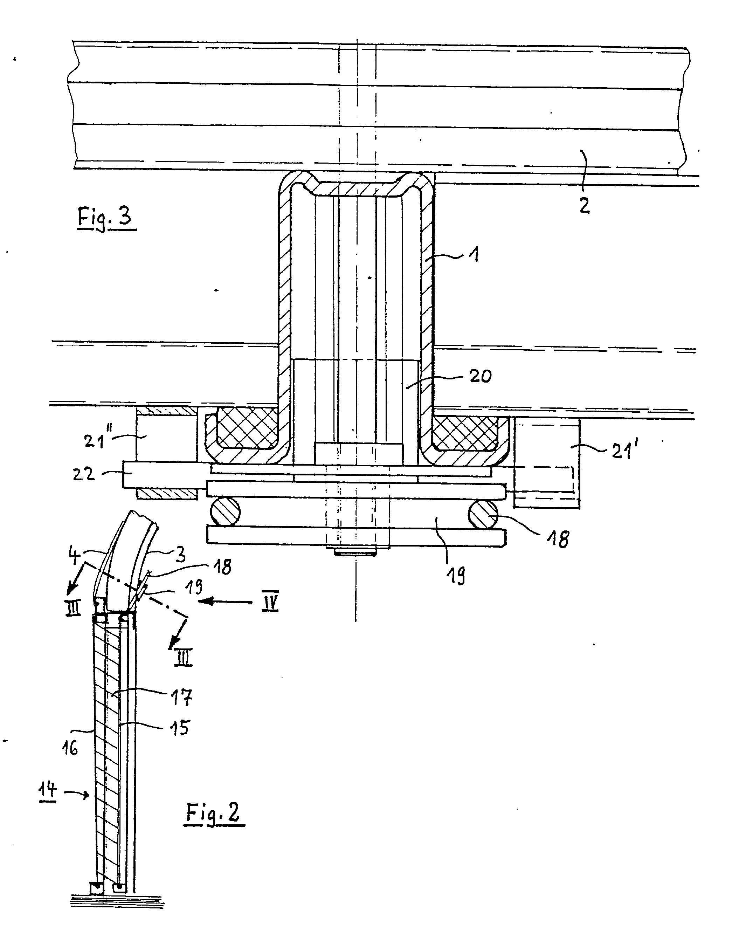

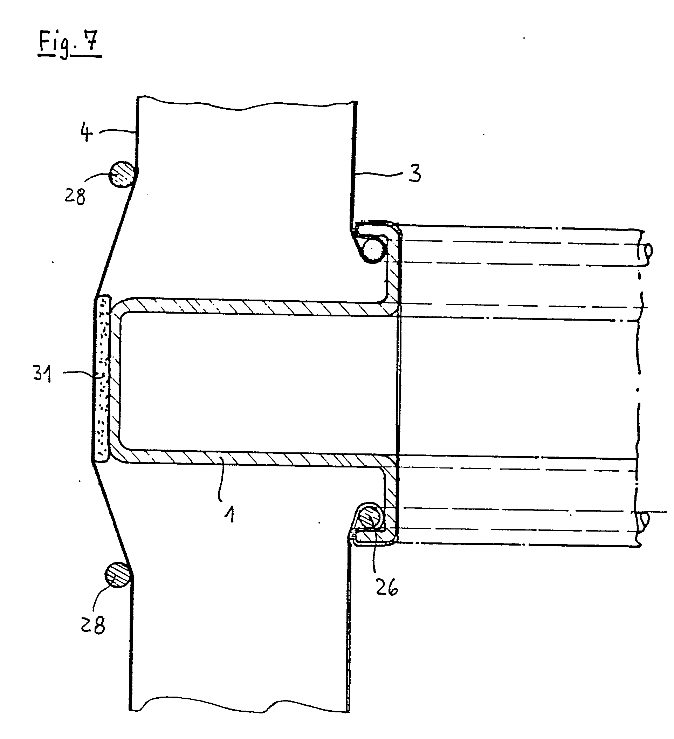

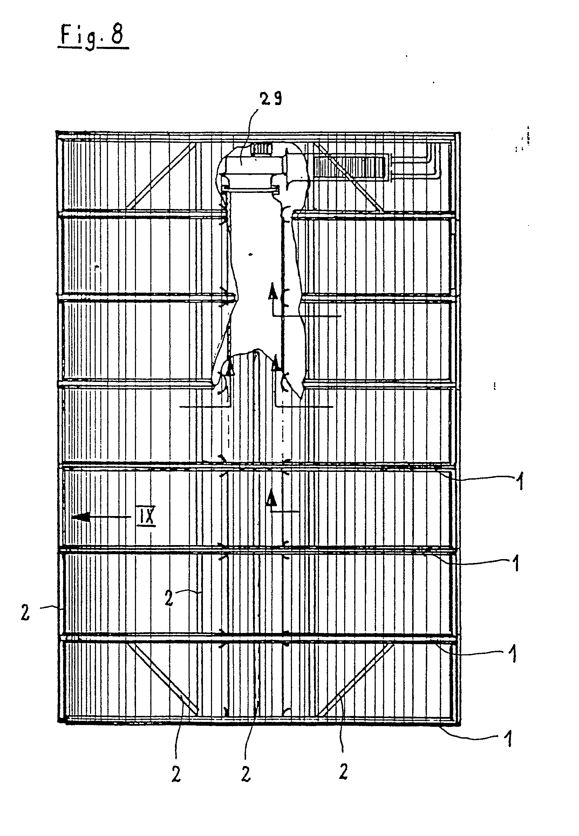

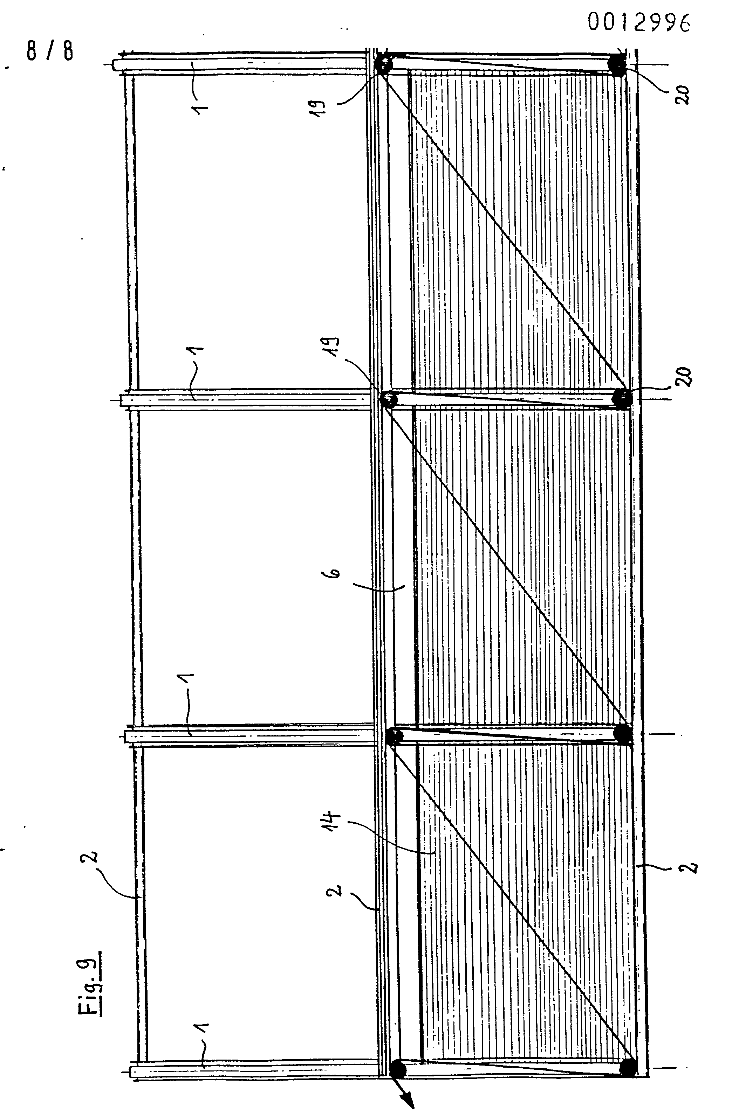

Die in den Figuren dargestellten Folienhalle hat ein Traggerüst aus in Hallenlängsrichtung hintereinander angeordneten
Querbindern 1, welche im Querschnitt ein Hutprofil haben
(Fig. 3) und durch in Hallenlängsrichtung angeordnete C-Profilteile 2 (Fig. 8 und 9) starr miteinander verbunden sind.
Die Querbinder 1 sind in Längsrichtung parabelförmig gebogen, so daß die Krempe des Hutprofils innen liegt (Fig. 7).
Bei dem dargestellten Ausführungsbeispiel bestehen die Innen-
und die Außenwand 3 bzw. 4 der Folienhalle aus thermoplastischer Folie, die außen über das Hutprofil gespannt bzw. innen in der
Krempe desselben in weiter unten noch näher beschriebener
Weise befestigt ist. Dadurch sind zwischen den einzelnen
Querbindern 1 und zwischen Innen- und Außenwand 3 bzw. 4
Luftkanäle gebildet, die am First der Folienhalle in einen
gemeinsamen Luftsammelkanal 5 münden. Der Luftsammelkanal
ist entweder ein sich über die Länge der Folienhalle erstrek-
kendes und mit einem Luftauslaß 27 versehenes Rohr (Fig. 1)

0012996

oder aber ein sich über die Länge der Folienhalle erstrekkender Folienschlauch, der durch ein von unten gegen die
Querbinder 1 geschraubtes C-Profilteil gehalten wird (Fig. 8).

Die Außenwand 4 ist glasklar transparent, während die Innenwand 3 getrübt ist. Dadurch wird in dem Raum zwischen
Innen- und Außenwand 3 bzw. 4 über einen in jedem Feld zwischen zwei Querbindern 1 vorgesehenen Lufteinlaß 6 einströmende Luft bei Sonneneinstrahlung erwärmt. Die erwärmte Luft
steigt in dem Raum zwischen Innen- und Außenwand durch Konvektionswirkung nach oben und gelangt in den Luftsammelkanal 5, von welchem aus sie durch einen Wärmetauscher 7
strömt. Der Wärmetauscher 7 ist Teil der Heizanlage der Folienhalle. Der Wärmetauscher 7 ist von Wasser durchströmt,
das in dem Wärmetauscher durch die erwärmte Luft erwärmt
und durch eine Pumpe 8 oder durch Konvektionswirkung, wenn
keine Pumpe vorhanden ist, in einen Warmwasserspeicher 9
gefördert wird, der mit dem Wärmetauscher 7 in einem geschlossenen Kreislauf 10 liegt.

Es sei angemerkt, daß die Belüftungs- und Temperaturregelung auch ohne Sonnenheizanlage funktioniert.

Wenn keine Sonneneinstrahlung vorhanden ist und das Innere
des Folienhauses zu beheizen ist, wird mittels der Pumpe 8
Warmwasser aus dem Warmwasserspeicher 9 durch den Wärmetauscher 7 geleitet. Über die Lufteinlässe 6 angesaugte
Luft gelangt über den Luftsammelkanal 5 in den Wärmetauscher und wird darin durch das Warmwasser vor dem Eintritt
in das Folienhaus erwärmt. Zum Ansaugen der Luft kann zusätzlich ein Gebläse 29 (Fig. 8) eingeschaltet werden.

Die Stromversorgungsanlage der Folienhalle besteht aus
einer Batterie mit vorgeschaltetem Generator, welche insgesamt mit 11 bezeichnet sind (Fig. 1). Der Generator wird durch einen Windkollektor 12 angetrieben und lädt die Batterie auf. Wenn die Batterie voll geladen ist, wird über eine elektronische Regelung automatisch auf einen Heizwiderstand 13 umgeschaltet, der sich im Warmwasserspeicher 9 befindet und das Wasser zusätzlich aufheizt. Aufgrund der so ausgebildeten Stromversorgungsanlage benötigt die Folienhalle keinen Netzanschluß.

Unten an den Längsseiten der Folienhalle sind Lüftungsklappen 14 vorgesehen (Fig. 1 und 2), die für einen Luftaustausch zwischen innen und außen geöffnet werden können. Die Lüftungsklappen 14 bestehen· jeweils aus einer Innenwand 15 und einer Außenwand 16 aus thermoplastischer Folie, welche durch Folienrippen 17, die nicht unbedingt erforderlich sind, in gegenseitigem Abstand gehalten werden. Am oberen Ende jeder Lüftungsklappe 14 ist ein Seilzug 18 befestigt, der über Umlenkrollen 19, 20 zu einer Betätigungsvorrichtung, beispielsweise einer Winde (nicht dargestellt) führt. Wenn eine Lüftungsklappe 14 durch den Seilzug 18 heruntergelassen wird, legt sie sich ziehharmonikaartig zusammen. Die Umlenkrollen 19, 20 sind jeweils an der Innenseite eines Querbinders 1 drehbar gelagert.

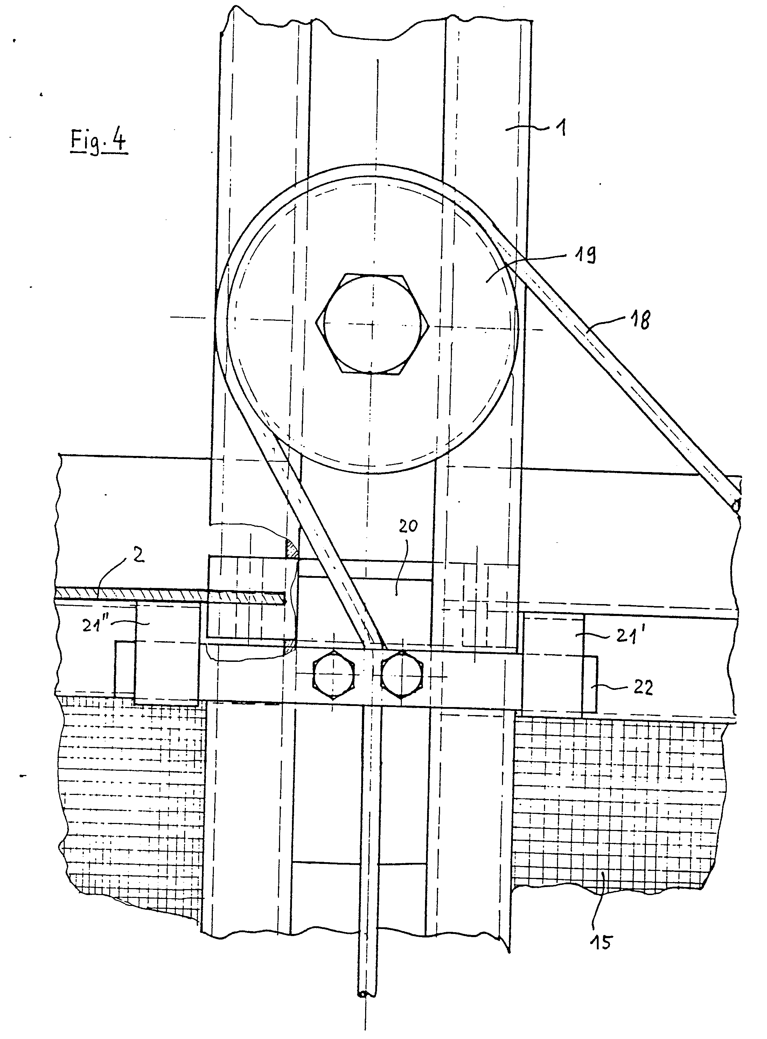

Fig. 9 zeigt eine Innenansicht eines Teils der Längswand der Folienhalle in Richtung des Pfeils IX in Fig. 8. Unterhalb der Umlenkrollen 19 ist jeweils eine der Umlenkrollen 20 an den Querbindern 1 drehbar gelagert. Der Seilzug 18 ist in der dargestellten Weise über sämtliche Umlenkrollen geschert und wird durch eine einzige Winde (nicht dargestellt) betätigt. Wenn auf den Seilzug 18 eine Zugkraft ausgeübt wird, werden sämtliche Lüftungsklappen 14 nach oben mitgeschleppt und geschlossen. In Fig. 9 sind die Lüftungsklappen teilweise geöffnet gezeigt. Wenn eine individuelle Regulierung der Luftzufuhr in das Innere der Folienhalle erwünscht ist, können einzelne Lüftungsklappen in im folgenden unter Bezugnahme auf Fig. 3 und 4 näher beschriebener Weise von dem Seilzug 18 abgekuppelt werden.

Der an den Lüftungsklappen 14 oben befestigte Seilzug 18 ist in jedem Querbinder 1 mittels eines Klotzes 20 geführt (Fig. 3 und 4). An der Innenwand 15 der Lüftungsklappe 14 sind beiderseits des Querbinders 1 Ösen 21', 21" befestigt und in diese Ösen ist ein Querbügel 22 eingehängt, an welchem der Seilzug 18 gemäß Fig. 4 mittels angeschraubter Klemmplatte (nicht dargestellt) befestigt ist. Wenn eine Lüftungsklappe 14 nicht durch den Seilzug mitgeschleppt werden soll, ist lediglich der Querbügel 22 aus den Ösen 21', 21" auszuhängen und die Lüftungsklappe an einem C-Profiltil 2 einzuhängen. Die betreffende Lüftungsklappe kann dann vom Seil nicht mitgeschleppt werden und bleibt geschlossen.

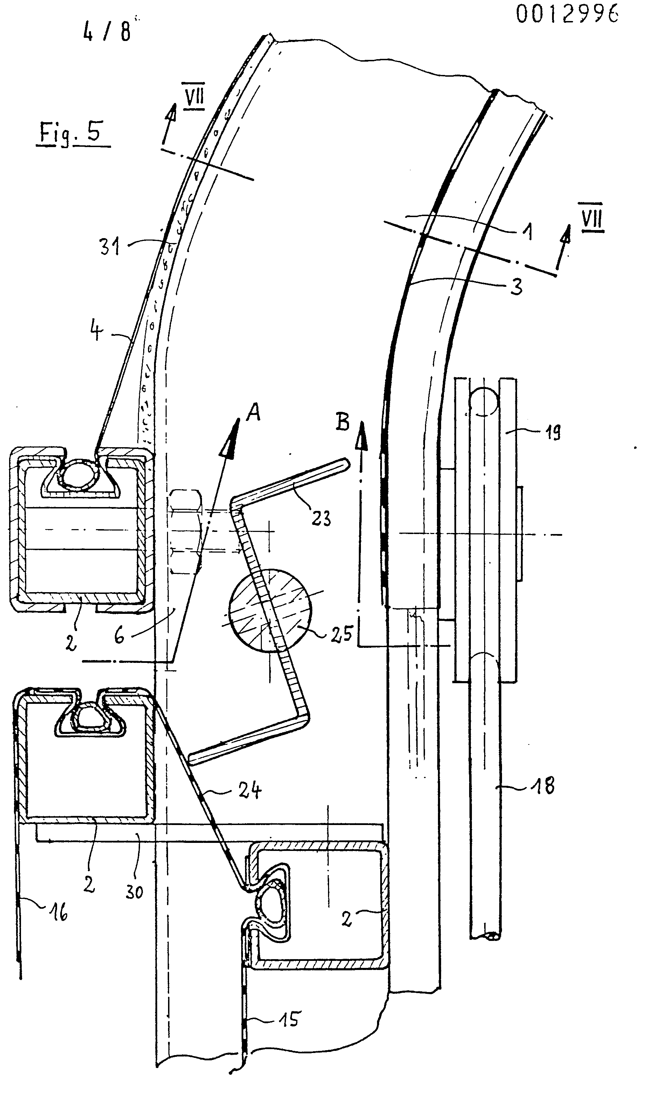

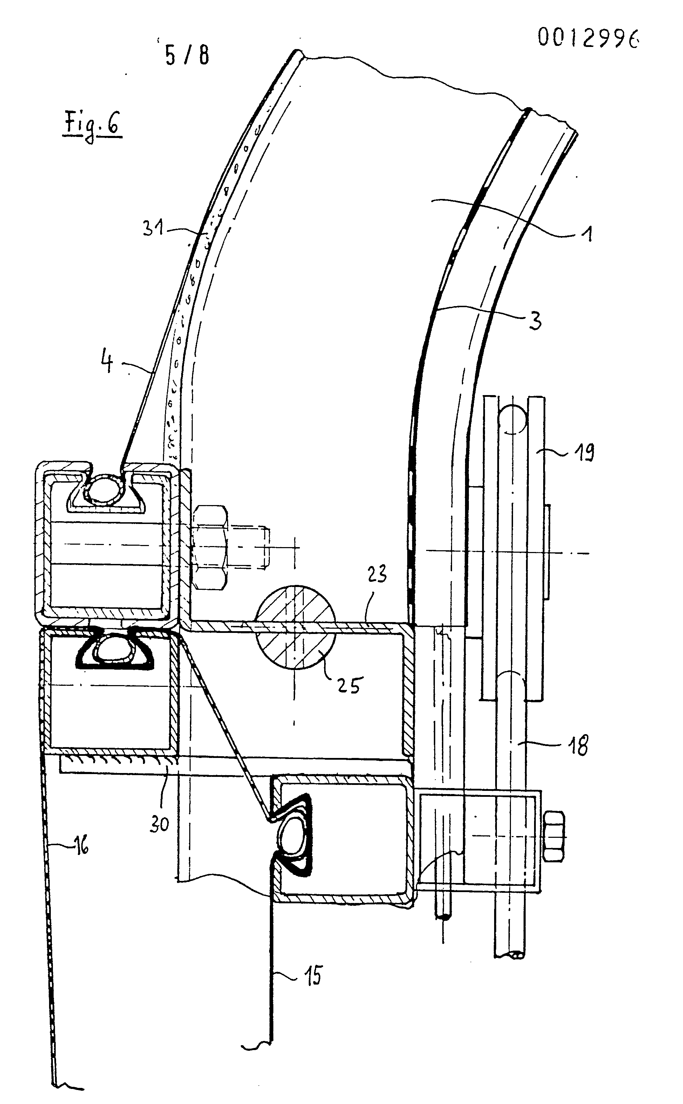

Über jeder Lüftungsklappe 14 befindet sich in jedem Feld zwischen zwei Querbindern 1 ein Lufteinlaß 6, der in den Fig. 5 und 6 ausführlich dargestellt ist. Zwischen jeweils zwei Querbindern 1 ist ein steuerbares Absperrorgan in Form einer Klappe 23 angeordnet. Der Lufteinlaß 6 wird nach unten hin durch die von der Innenwand 15 zur Außenwand 16 der Lüftungsklappe 14 führende Folie 24 begrenzt. Die Folie 24 der Lüftungsklappe ist zwischen zwei durch einen Steg 30 starr miteinander verbundenen und an den Querbindern 1 vertikal verschiebbaren C-Profilteilen 2 straff gespannt. In Fig. 6 ist die Lüftungsklappe geschlossen, nachdem sie durch den Seilzug 18 bis in ihre obere Endstellung mitgeschleppt worden ist.

Die Klappe 23, die im Querschnitt Z-förmig ist, ist mittels einer Welle 25 zwischen zwei Endstellungen, von denen eine in Fig. 6 gezeigt ist, stufenlos verstellbar.

In der in Figur 6 gezeigten Endstellung der Klappe 23 ist
der Raum zwischen Innen- und Außenwand 3 bzw. 4 verschlossen und der Lufteintritt ist nur über die Lüftungsklappe
14 möglich, wenn diese geöffnet wird, d.h. durch Nachlassen des Seilzuges abwärts bewegt wird.

In der in Figur 5 gezeigten Stellung der Klappe 23 kann
Luft über den Lufteinlaß 6 in den Raum zwischen Innen-
und Außenwand 3 bzw. 4 in Richtung des Pfeils A und außerdem in Richtung des Pfeils B aus dem Inneren der Folienhalle einströmen. Dadurch wird die von außen über den Lufteinlaß 6 einströmende kalte Luft mit der aus dem Inneren
der Folienhalle einströmenden warmen Luft vermischt, so daß sie
am First auch bei fehlender Sonneneinstrahlung erwärmt in
das Innere der Folienhalle eintritt. Wenn die Klappe 23
aus der in Figur 5 gezeigten Stellung im Uhrzeigersinn
weiter gedreht wird, kann die Luftzufuhr aus dem Inneren
der Folienhalle blockiert werden. Das ist zweckmäßig,
wenn eine ausreichende Sonneneinstrahlung zur Erwärmung der
Luft in dem Raum zwischen Innen- und Außenwand vorhanden
ist.

Wenn in Figur 5 die Lüftungsklappe 14 mit Hilfe des Seilzuges 18 vollständig geschlossen wird (in Fig. 6 gezeigte
Stellung), kann Luft nur noch aus dem Inneren der Folienhalle in den Raum zwischen Innen- und Außenwand 3 bzw. 4
einströmen. Diese Einstellung ist zweckmäßig, wenn das Wasser im Warmwasserspeicher 9 besonders schnell aufgeheizt
werden soll.

Gemäß Figur 7 ist die Außenwand 4, die über die Querbinder
1 gelegt ist, mittels außen über die Folienhalle gelegter
Kunststoffdrähte 28 gespannt. Zum Schutz der Außenwand 4
gegen mechanische oder thermische Beschädigung ist zwischen
die Außenwand und den Querbinder 1 ein Schaumstoffstreifen
31 eingelegt. Die Innenwand 3 ist gemäß Figur 7 an der

0012996

Krempe des Hutprofils des Querbinders 1 mittels Schnüren
26 festgehalten. Bei der Montage wird die Innenwand 3
lose über die Innenfläche der Querbinder 1 gelegt und zusammen mit den Schnüren 26 hinter der Krempe eingespannt,
ähnlich wie eine Fahrraddecke auf der Felge.

Unser Zeichen          L 140- EP

Helmut Lamm

7303 Neuhausen/Filder


P a t e n t a n s p r ü c h e


1. Folienhalle mit auf einem Traggerüst angeordneter Innenwand und Außenwand, von denen wenigstens die Außenwand aus glasklarer thermoplastischer Folie besteht, während die Innenwand wahlweise aus thermoplastischer Folie, duroplastischem Kunststoff oder Glas besteht, mit an den Längsseiten der Halle vorgesehenen verstellbaren Lüftungsklappen zur Regulierung der Temperatur im Inneren der Halle, dadurch gekennzeichnet, daß der Raum zwischen Innen- und Außenwand (3, 4) an seinem unteren Ende oberhalb der Lüftungsklappen (14) mit der äußeren Umgebung über wenigstens einen Lufteinlaß (6) und an seinem oberen Ende in der Nähe des Firstes der Halle mit deren Innerem über wenigstens einen Luftauslaß (27) verbunden ist.


2. Halle nach Anspruch 1, dadurch gekennzeichnet, daß im Lufteinlaß (6) ein steuerbares Absperrorgan (23) vorgesehen ist.

3. Halle nach Anspruch 1 oder 2, mit einer Sonnenheizanlage mit Wärmetauscher, Wärmespeicher und Umwälzvorrichtung für den Wärmeträger, dadurch gekennzeichnet, daß am Luftauslaß (5) der Wärmetauscher (7) angeordnet ist, in welchem die den Wärmeträger bildende Luft, die beim Durchströmen des Raumes zwischen Innen- und Außenwand (3, 4) durch Sonneneinstrahlung erwärmt worden ist, ihre Wärme abgibt.

4. Halle nach einem der Ansprüche 1 bis 3, dadurch gekennzeichnet, daß der Raum zwischen Innen- und Außenwand (3, 4) durch Traggerüstquerbinder (1), die im Querschnitt ein Hutprofil haben und durch C-Profilteile (2) miteinander verbunden sind, in einzelne Felder unterteilt ist, die oben am First in einem Luftsammelkanal (5) münden und unten jeweils einen Lufteinlaß (6) mit jeweils einem Absperrorgan (23) aufweisen.

5. Halle nach Anspruch 4, dadurch gekennzeichnet, daß jede Lüftungsklappe (14) einem Feld zugeordnet, doppelwandig (15, 16) ausgebildet und individuell regulierbar ist.

6. Halle nach Anspruch 5, dadurch gekennzeichnet, daß die Lüftungsklappen (14) nach Art eines Faltenbalges ausgebildet und am oberen Ende jeweils mit einem Seilzug (18) verbunden sind, der über Umlenkrollen (19, 20) zu einer Betätigungsvorrichtung führt.

7. Halle nach einem der Ansprüche 2 bis 6, dadurch gekennzeichnet, daß jedes Absperrorgan (23) eine im Querschnitt Z-förmige Klappe ist.

8. Halle nach Anspruch 7, dadurch gekennzeichnet, daß die Klappe so gelagert ist, daß sie in einer Endstellung (Fig.5) Luft in den Raum zwischen Innen- und Außenwand (3, 4) einläßt und in der anderen Stellung (Fig. 6) den Lufteinlaß (6) verschließt.

0012996

9. Halle nach einem der Ansprüche 4 bis 8, mit einer Innenwand aus thermoplastischer Folie und einem Traggerüst mit
parabelförmigen Querbindern, dadurch gekennzeichnet, daß
die Innenwand (3) in der Hutprofilkrempe der Querbinder (1)
mittels eingelegter Schnur (26) befestigt ist (Fig. 7).

Fig·1

0012996

Fig. 3

Fig. 2

Fig. 4

3 / 8

0012996

0012996

Fig.5

Fig.6

0012996

Fig. 7

0012996

Fig. 8

Fig. 9

0012996
Nummer der Anmeldung

**Europäisches Patentamt**

**EUROPÄISCHER RECHERCHENBERICHT**

EP 79 10 5273

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 335 800 (VALMET)<br><br> * Seite 1, Zeile 31 - Seite 4, Zeile 38; Figur * | 1,3 |
| | -- | |
| | FR - A - 2 304 739 (SIBERT)<br><br> * Seite 2, Zeile 23 - Seite 4, Zeile 19; Figuren 1-3 * | 1,2 |
| | -- | |
| | GB - A - 1 170 850 (CONANGLE)<br><br> * Seite 2, Zeilen 72-98; Figur 2 * | 1 |
| | ---- | |

**KLASSIFIKATION DER ANMELDUNG (Int.Cl ³)**

A 01 G 9/24
    9/14
F 24 F 7/04
E 04 H 3/16

**RECHERCHIERTE SACHGEBIETE (Int Cl ³)**

A 01 G 9/14
    9/24
F 24 F 7/04
F 24 D 11/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E kollidierende Anmeldung

D in der Anmeldung angeführtes Dokument

L aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-03-1980 | HERYGERS |

EPA form 1503.1 06.78